# EUROPÄISCHE PATENTSCHRIFT

(11) **EP 1 215 547 B1**
(45) Veröffentlichungstag und Bekanntmachung des Hinweises auf die Patenterteilung: **03.01.2007**
(21) Anmeldenummer: 01124899.4
(22) Anmeldetag: 18.10.2001
(51) Int. Cl.: G05B 19/00

(54) **Verschlüsselung von Steuerungsprogrammen**
Encryption of control programs
Chiffrage de programmes de commande

(30) Priorität: 21.12.2000 DE 10064400; 18.12.2000 DE 10063059; 15.12.2000 DE 10062741; 23.05.2001 DE 10125383; 23.05.2001 DE 10125386; 06.08.2001 DE 10138533
(43) Veröffentlichungstag der Anmeldung: 19.06.2002
(73) Patentinhaber: SIEMENS AKTIENGESELLSCHAFT, 80333 München (DE)
(72) Erfinder: Büssert, Jürgen, 91338 Igensdorf (DE)

(56) Entgegenhaltungen:
- WO-A-00/56033
- GB-A- 2 149 944
- US-A- 4 281 379
- US-A- 6 006 190
- US-A- 6 099 317

## Beschreibung

Die vorliegende Erfindung betrifft ein Verfahren und eine Vorrichtung zur Parametrierung, Projektierung und Inbetriebnahme von Steuerungssystemen und/oder Antrieben.

Die Steuerungsprogramme von programmierbaren Steuerungen werden in der Regel in sogenannten Entwicklungs- oder Engineeringsystemen erstellt. Engineeringsysteme dienen neben dem Erstellen von Steuerungsprogrammen auch zur Inbetriebnahme, Projektierung und Parametrierung von Steuerungen und Antrieben.

Es ist durchaus üblich, dass das Erstellen der Steuerungsprogramme durch ein erstes Fachteam und das Inbetriebnehmen, Projektieren und Parametrieren durch ein zweites Fachteam erfolgt, wobei beide Fachteams örtlich voneinander getrennt sind. Dies bedeutet, dass das vom ersten Fachteam erstellte Steuerungsprogramm zur weiteren Verwendung zu dem zweiten Fachteam übermittelt werden muss. Dabei ist es vielfach wünschenswert, dass zum einen rasche Übertragungswege genutzt werden können und zum anderen bei der Übermittlung eine gewisse Vertraulichkeit gewahrt wird, damit das jeweilige Know-how nicht beliebig zugänglich ist.

Aus der Druckschrift GB 2 149 944 A ist ein Softwareverteilungssystem bekannt, bei dem die zu verteilende Software mit einem einzigartigen Schlüssel verschlüsselt und über eine Kommunikationseinrichtung zu einem Anwender übermittelt wird. Dabei wird ein Teil der Software verschlüsselt. Die Software wird beim Anwender bis zu einer verschlüsselten Passage abgearbeitet. Die verschlüsselte Passage wird dann zum Hersteller geschickt und dort unter Überprüfung einer Berechtigung entschlüsselt und an den Anwender zurück geschickt. Darauf hin wird beim Anwender die Software normal weiter abgearbeitet. Dies dient zum Schutz der Software gegen Kopieren.

Aus der Patentschrift US 4,281,379 ist ferner ein computerbetriebenes Steuersystem für eine NC-Maschine bekannt. Dieses Steuersystem besitzt einen Microprozessor, der über eine Telekommunikationsdatenleitung mit einem Allzweckcomputer operativ verbunden ist. Damit kann das Maschinensteuerprogramm von dem Allzweckcomputer auf den Microprozessor übertragen werden. Anschließend lässt sich das Maschinensteuerprogramm auf der Maschine editieren.

Somit besteht die Aufgabe der vorliegenden Erfindung darin, ein Verfahren und ein System vorzuschlagen, mit denen ein geschützter und rascher Transfer von Steuerungsprogrammen ermöglicht wird.

Erfindungsgemäß wird diese Aufgabe gelöst durch ein Verfahren zum Parametrieren und Projektieren von Steuerungsprogrammen durch Verschlüsseln eines Teils eines Steuerungsprogrammcodes in einem ersten Entwicklungssystem, Transferieren des teilweise verschlüsselten Steuerungsprogrammcodes von dem ersten Entwicklungssystem zu einem zweiten Entwicklungssystem und Entschlüsseln des teilweise verschlüsselten Steuerungsprogrammcodes in dem zweiten Entwicklungssystem, wobei das Entschlüsseln des teilweise verschlüsselten Steuerungsprogrammcodes nach einem Editieren des teilweise verschlüsselten Steuerungsprogrammcodes in dem zweiten Entwicklungssystem erfolgt.

Darüber hinaus wird die genannte Aufgabe gelöst durch ein System zum Parametrieren und Projektieren von Steuerungsprogrammen mit einer ersten Entwicklungseinrichtung zum Entwickeln eines Steuerungsprogrammcodes, die eine Verschlüsselungseinheit zum Verschlüsseln eines Teils des Steuerungsprogrammcodes umfasst, einer Kommunikationseinrichtung zum Transferieren des teilweise verschlüsselten Steuerungsprogrammcodes von der ersten Entwicklungseinrichtung zu einer zweiten Entwicklungseinrichtung und der zweiten Entwicklungseinrichtung, die eine Entschlüsselungseinrichtung zum Entschlüsseln des teilweise verschlüsselten Steuerungsprogrammcodes umfasst, wobei in der zweiten Entwicklungseinrichtung ein zweiter Editor zum Editieren des Steuerungsprogrammcodes zwischen einen Preprozessor zum Entschlüsseln des teilweise verschlüsselten Steuerungsprogrammcodes und die Kommunikationseinrichtung geschaltet ist.

In vorteilhafter Weise ermöglicht die Erfindung somit, das den Steuerungsprogrammen zugrundeliegende Know-how zu schützen.

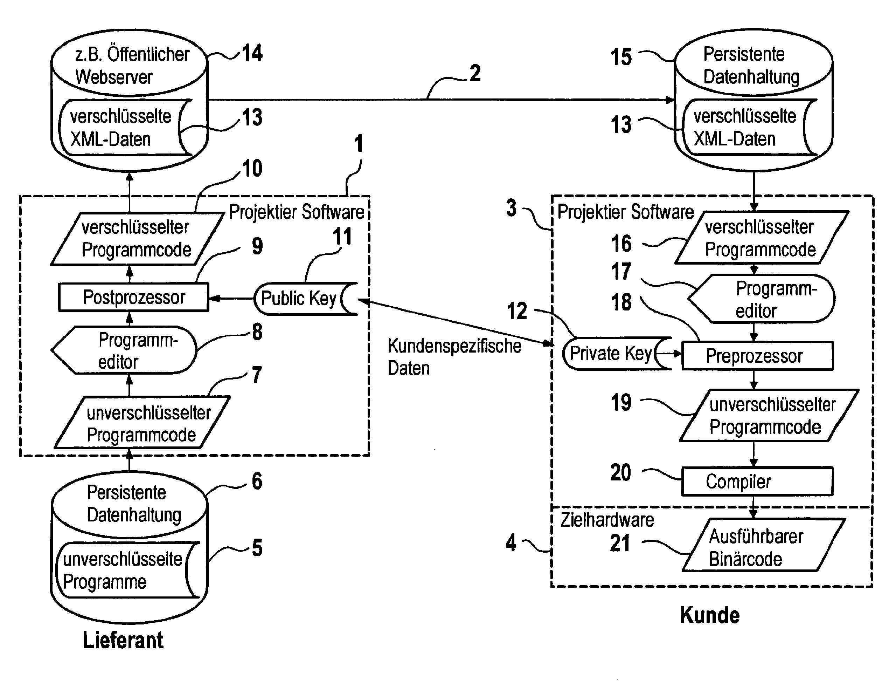

Die vorliegende Erfindung wird nun anhand der beigefügten Zeichnung näher erläutert, die einen Datenflussplan gemäß einer Ausführungsform der vorliegenden Erfindung darstellt.

Der Ersteller und Lieferant eines Steuerungsprogramms entwickelt dieses in einer Projektier-Software bzw. Engineeringsystem 1. Der Kunde erhält dieses Steuerungsprogramm über das Internet 2 oder ein beliebiges anderes Netzwerk bzw. andere Verbindung. Der Kunde integriert das empfangene Steuerungsprogramm in sein Engineersystem 3 und kann damit seine Zielhardware bzw. sein Runtimesystem 4 ansteuern.

Damit das Steuerungsprogramm bei der Übertragung in öffentlichen Netzen und/oder für den Kunden nicht in allen Details Zugänglich ist, wird das Steuerungsprogramm teilweise verschlüsselt. Dies kann durch standardisierte Verschlüsselungstechniken, Z. B. P6P-Verfahren, erfolgen. Dabei können symmetrische oder asymmetrische Schlüssel verwendet werden.

Im Einzelnen erstellt der Lieferant zunächst ein unverschlüsseltes Steuerungsprogramm 5 und hält dieses in einer persistenten Datenhaltung 6. Den unverschlüsselten Programmcode 5 bzw. 7 kann der Lieferant aus der persistenten Datenhaltung 6 in einen Programmeditor 8 des Engineeringsystems 1 laden. In dem Editor 8 kann der Lieferant das Programm editieren und zur Verschlüsselung des Programms einen Postprozessor 9 anstoßen, der einen verschlüsselten Programmcode 10 ausgibt. Zur Verschlüsselung verwendet der Postprozessor 9 einen Schlüssel 11. Typischer Weise wird zur Verschlüsselung das standardisierte PGP-Verfahren verwendet. Bei asymmetrischer Verschlüsselung verwendet der Lieferant zur Verschlüsselung einen so genannten "Public-Key" und der Kunde zur Entschlüsselung den dazu passenden "Privat-Key" 12.

Zum Übertragen des verschlüsselten Programmcodes 10 beispielsweise über das Internet 2 werden die Daten zunächst aus der Projektiersoftware 1 exportiert. Vorzugsweise werden die Daten dabei in HTML- bzw. XML-Format oder ein anderes von Standard-Internetclients lesbares Format gewandelt. Der Vorteil derartig formatierter Daten liegt darin, dass mit Standard-Tools auf die Daten zugegriffen werden kann, und der Anwender nicht notwendiger Weise über ein Engineeringsystem verfügen muss.

Nach dem Export werden die verschlüsselten XML-Daten 13 beispielsweise in einem öffentlichen Webserver 14 hinterlegt. Dieser stellt das verschlüsselte Steuerungsprogramm im XML-Format der Allgemeinheit oder entsprechend der Verschlüsselungstechnik nur einen bestimmten, gewünschten Kundenkreis zur Verfügung.

Der Kunde lädt die verschlüsselten XML-Daten 13 in seine persistente Datenhaltung 15. Aus der Datenhaltung 15 werden die Daten in das Engineeringsystem bzw. die Projektiersoftware 3 des Kunden importiert. Sofern das Engineeringsystem 3 des Kunden nicht auf dem XML-Format oder einem anderen von Standardinternet-Clients lesbaren Format basiert, findet beim Import eine Konvertierung der Daten in das Engineeringsystem-Format statt, wobei der entsprechende, verschlüsselte Programmcode 16 erzeugt wird.

Der Kunde kann nun den verschlüsselten Programmcode 16 in seinem Programmeditor 17, der wiederum Teil des Engineeringsystems 3 ist, beispielsweise zum Parametrieren des zu steuernden Systems, editieren.

Je nach Verschlüsselungstiefe ist der Kunde in der Lage nur die vom Lieferanten gewünschten Daten zu editieren. So ist es möglich, die Daten beliebig tief in horizontaler und vertikaler Richtung zu verschlüsseln.

Eine Verschlüsselung auf einer bestimmten horizontalen Ebene bedeutet, dass beispielsweise Module auf gleicher funktioneller Ebene unterschiedlich verschlüsselt werden. So könnte beispielsweise eine Bibliothek mit den Funktionen a, b, c und d mit mehreren Schlüsselpaaren verschlüsselt werden, so dass die Kunden A, B, C und D nur die jeweils für sie bestimmten Module entschlüsseln bzw. verwenden können.

Das vertikale Verschlüsseln bedeutet ein unterschiedliches Verschlüsseln in verschiedenen hierarchischen, funktionalen Ebenen. So ist es denkbar, dass ein Kunde zum Betreiben des Steuerungsprogramms lediglich die Modulparameter einschließlich der Returnparameter kennen muss. Daher kann der Kopf des Steuerungsprogramms unverschlüsselt bleiben, während der Kern des Programms verschlüsselt ist. Dies dient insbesondere dazu, das der Software zugrundeliegende Know-how zu schützen. Darüber hinaus kann das Softwareprogramm zur Übertragung und Abarbeitung durch den Kunden aber auch komplett verschlüsselt sein und beispielsweise nur für das Servicepersonal vollständig entschlüsselbar sein. Weitere beliebig granulare Verschlüsselungen sind hier entsprechend dem modularen Aufbau eines Steuerungsprogramms denkbar.

Nach dem Editieren wird das ganz oder teilweise verschlüsselte Steuerungsprogramm in einem Preprozessor 18 des Engineeringsystems 3 entschlüsselt. Hierzu verwendet der Preprozessor 18 den bereits erwähnten privaten Schlüssel 12.

Der vom Preprozessor 18 erhaltene unverschlüsselte Programmcode 19 wird in einem Compiler 20 in einen mikroprozessorspezifischen, ausführbaren Binärcode 21 umgesetzt.

Zur Steuerung eines Systems wird nun der ausführbare Binärcode 21 von der Projektiersoftware bzw. dem Engineeringsystem 3 in die Zielhardware bzw. das Runtimesystem 4 geladen. Dort wird der Binärcode von einem Mikroprozessor abgearbeitet.

Durch die genannte Integration eines Verschlüsselungssystems in Engineeringsysteme unter Verwendung von asymmetrischen Schlüsseln 11, 12 ergeben sich die folgenden Vorteile:
a) Die bekannten Routinen für Ver- und Entschlüsselung wandeln von ASCII-Text in ASCII-Text. Die verschlüsselten Bereiche lassen sich also genauso speichern und transportieren wie die unverschlüsselten Bereiche und bieten damit eine ideale Integration in das weitverbreitete XML-Format. Insbesondere lassen sich zur Weiterverarbeitung der Daten Standard-Tools verwenden.
b) Aufgrund der Verwendung eines Textformats lassen sich auch Teile eines Texts verschlüsseln. Somit kann, wie bereits erwähnt, der Kopf eines Programms mit so genannten Defines zum Anpassen unverschlüsselt bleiben, während der Körper des Programms mit den Funktionen aber geschützt wird.
c) Der Lieferant einer Anwendersoftware, z. B. Compiler oder Projektiertool, gibt dieser ein eigenes Schlüsselpaar. Bei asymmetrischer Verschlüsselung speichert der Lieferant den Public-Key mit den Kundendaten des Anwenders. Damit kann der Lieferant beispielsweise Bibliotheken für bestimmte Kunden mit deren Public-Key verschlüsseln und über beliebige Kanäle an diese Kunden übermitteln. Ein Kopieren der über öffentliche Kanäle zur Verfügung gestellten Anwendersoftware ist in diesem Fall sinnlos, da die Bibliothek ausschließlich auf der Anwendung des vorgesehenen Kunden entschlüsselt werden kann. Auf dieser Basis ist ein Lizenzsystem leicht realisierbar.
d) Die verschlüsselten Texte sind nicht analysierbar. Das interne Know-how bleibt somit geschützt.
e) Durch die Integration einer asymmetrischen Entschlüsselung in einen Preprozessor des Compilers lassen sich Programmteile gegen Missbrauch schützen, ohne den Compiler selbst zu ändern. Der Preprozessor läuft erst bei der Erzeugung des binären Codes für das Zielsystem. Darüber hinaus benötigt auch der Programmeditor keine Änderung, da die verschlüsselten Texte als solche angezeigt werden.

## Patentansprüche

1. Verfahren zum Parametrieren und Projektieren von Steuerungsprogrammen durch
- Verschlüsseln eines Steuerungsprogrammcodes (5, 7) in einem ersten Entwicklungssystem (1),
- Transferieren des verschlüsselten Steuerungsprogrammcodes (10, 16) von dem ersten Entwicklungssystem (1) zu einem zweiten Entwicklungssystem (3), und
- Entschlüsseln des verschlüsselten Steuerungsprogrammcodes in dem zweiten Entwicklungssystem (3),
**dadurch gekennzeichnet, dass** nur ein Teil des Steuerungsprogramms verschlüsselt wird und
- das Entschlüsseln des teilweise verschlüsselten Steuerungsprogrammcodes nach einem Editieren des teilweise verschlüsselten Steuerungsprogrammcodes in dem zweiten Entwicklungssystem (3) erfolgt.

2. Verfahren nach Anspruch 1, wobei das Transferieren ein Exportieren des verschlüsselten Steuerungsprogrammcodes (10, 16) in ein von Standard-Internetclients lesbares Format, insbesondere XML oder HTML, durch das erste Entwicklungssystem (1) und ein Importieren der Daten in dem von Standard-Internetclients lesbaren Form durch das zweite Entwicklungssystem (3) umfasst.

3. Verfahren nach Anspruch 1 oder 2, wobei das Ver- und Entschlüsseln der Daten durch asymmetrische Schlüssel (11, 12) erfolgt.

4. Verfahren nach einem der vorhergehenden Ansprüche, wobei das Verschlüsseln des Steuerungsprogrammcodes nach einem Editieren des Steuerungsprogrammcodes in dem ersten Entwicklungssystem (1) erfolgt.

5. Verfahren nach einem der vorhergehenden Ansprüche, wobei der Kopf des Steuerungsprogramms unverschlüsselt bleibt.

6. Verfahren zur Inbetriebnahme von Steuerungssystemen und/oder Antrieben durch
Parametrieren oder Projektieren eines Steuerungsprogramms nach einem der Ansprüche 1 bis 5,
Kompilieren des entschlüsselten Steuerungsprogramms und
Abarbeiten des kompilierten Steuerungsprogramms durch einen Mikroprozessor.

7. System zum Parametrieren und Projektieren von Steuerungsprogrammen mit
- einer ersten Entwicklungseinrichtung (1) zum Entwickeln eines Steuerungsprogrammcodes (5, 7), die eine Verschlüsselungseinheit (9) zum Verschlüsseln des Steuerungscodes (5, 7) umfasst,
- einer Kommunikationseinrichtung (2) zum Transferieren des verschlüsselten Steuerungsprogrammcodes (10, 16) von der ersten Entwicklungseinrichtung (1) zu einer zweiten Entwicklungseinrichtung (3), und
- der zweiten Entwicklungseinrichtung (3), die eine Entschlüsselungseinrichtung (18) zum Entschlüsseln des verschlüsselten Steuerungsprogrammcodes (10, 16) umfasst,
**dadurch gekennzeichnet, dass** nur ein Teil des Steuerungsprogramms verschlüsselt wird und
in der zweiten Entwicklungseinrichtung (3) ein zweiter Editor (17) zum Editieren des Steuerungsprogrammcodes (10, 16) zwischen einen Preprozessor (18) zum Entschlüsseln des teilweise verschlüsselten Steuerungsprogrammcodes (10, 16) und die Kommunikationseinrichtung (2) geschaltet ist.

8. System nach Anspruch 7, wobei die erste Entwicklungseinrichtung (1) eine Exporteinrichtung zum Exportieren des verschlüsselten Steuerungsprogrammcodes (10, 16) in einem von Standard-Internetclients lesbaren Format, insbesondere XML oder HTML, und die zweite Entwicklungseinrichtung (3) eine Importeinrichtung zum Importieren der Daten in dem von Standard-Internetclients lesbaren Format umfasst.

9. System nach Anspruch 7 oder 8, wobei das Ver- und Entschlüsseln der Daten durch asymmetrische Schlüssel (11, 12) erfolgt.

10. System nach einem der Ansprüche 7 bis 9, wobei in der ersten Entwicklungseinrichtung (1) ein Postprozessor (9) zum Verschlüsseln des Steuerungsprogrammcodes (5, 7) zwischen einen ersten Editor (8) zum Editieren des Steuerungsprogrammcodes (5, 7) und die Kommunikationseinrichtung (2) geschaltet ist.

11. System nach einem der Ansprüche 7 bis 10, wobei der Kopf des Steuerungsprogramms unverschlüsselt bleibt.

12. Anordnung zur Inbetriebnahme von Steuerungssystemen und/oder Antrieben mit
einem System zum Parametrieren und Projektieren von Steuerungsprogrammen nach einem der Ansprüche 7 bis 11, wobei die zweite Entwicklungseinrichtung (3) einen Compiler (20) zum Kompilieren des entschlüsselten Steuerungsprogramms (19) umfasst und einen Mikroprozessor zum Abarbeiten des kompilierten Steuerungsprogramms ansteuert.

## Claims

1. Method for the configuration and project engineering of control programs by
- encrypting a control program code (5, 7) in a first development system (1),
- transferring the encrypted control program code (10, 16) from the first development system (1) to a second development system (3), and
- decrypting the encrypted control program code in the second development system (3),
**characterized in that** only part of the control program is encrypted, and
- the decryption of the partially encrypted control program code is carried out following editing of the partially encrypted control program code in the second development system (3).

2. Method according to Claim 1, the transfer comprising exporting the encrypted control program code (10, 16) into a format that can be read by standard Internet clients, in particular XML or HTML, by means of the first development system (1), and importing the data in the form that can be read by standard Internet clients by means of the second development system (3).

3. Method according to Claim 1 or 2, the encryption and decryption of the data being carried out by means of asymmetrical keys (11, 12).

4. Method according to one of the preceding claims, the encryption of the control program code being carried out following editing of the control program code in the first development system (1).

5. Method according to one of the preceding claims, in which the head of the control program remains unencrypted.

6. Method for the commissioning of control systems and/or drives by
configuring or project-engineering a control program according to one of Claims 1 to 5,
compiling the decrypted control program and
processing the compiled control program by means of a microprocessor.

7. System for the configuration and project engineering of control programs, having
- a first development device (1) for developing a control program code (5, 7), which comprises an encryption unit (9) for encrypting the control program code (5, 7),
- a communications device (2) for transferring the encrypted control program code (10, 16) from the first development device (1) to a second development device (3), and
- the second development device (3), which comprises a decryption device (18) for decrypting the encrypted control program code (10, 16),
**characterized in that** only part of the control program is encrypted, and a second editor (17) for editing the control program code (10, 16) is connected in the second development device (3), between a preprocessor (18) for decrypting the partially encrypted control program code (10, 16) and the communications device (2).

8. System according to Claim 7, the first development device (1) comprising an export device for exporting the encrypted control program code (10, 16) in a format that can be read by standard Internet clients, in particular XML or HTML, and a second development device (3) comprising an import device for importing the data in the format that can be read by standard Internet clients.

9. System according to Claim 7 or 8, the encryption and decryption of the data being carried out by means of asymmetrical keys (11, 12).

10. System according to one of Claims 7 to 9, a postprocessor (9) for encrypting the control program code (5, 7) being connected in the first development device (1), between a first editor (8) for editing the control program code (5, 7) and the communications device (2).

11. System according to one of Claims 7 to 10, in which the head of the control program remains unencrypted.

12. Arrangement for the commissioning of control systems and/or drives, having
a system for the configuration and project engineering of control programs according to one of Claims 7 to 11, the second development device (3) comprising a compiler (20) for compiling the decrypted control program (19) and driving a microprocessor for processing the compiled control program.

## Revendications

1. Procédé de paramétrage et de projection de programmes de commande, en
- cryptant un code de programme de commande (5, 7) dans un premier système de développement (1),
- transférant le code de programme de commande crypté (10, 16) du premier système de développement (1) à un deuxième système de développement (3), et
- décryptant le code de programme de commande crypté dans le deuxième système de développement (3),
**caractérisé en ce que** seule une partie du programme de commande est cryptée et le décryptage du code de programme de commande partiellement cryptée est effectué après l'édition du code de programme de commande partiellement crypté dans le deuxième système de développement (3).

2. Procédé selon la revendication 1, dans lequel l'étape de transfert comporte une étape d'exportation du code de programme de commande crypté (10, 16), effectuée par le premier système de développement (1), dans un format lisible par Standard-Internetclients, notamment XML ou HTML, et une étape d'importation des données, effectuée par le deuxième système de développement (3), dans le format lisible par Standard-Internetclients.

3. Procédé selon la revendication 1 ou 2, dans lequel le cryptage et le décryptage des données sont effectués avec des clés asymétriques (11, 12).

4. Procédé selon l'une des revendications précédentes, dans lequel le cryptage du code de programme de commande est effectué après une édition du code de programme de commande dans le premier système de développement (1).

5. Procédé selon l'une des revendications précédentes, dans lequel la tête du programme de commande reste non cryptée.

6. Procédé de mise en service de systèmes de commande et/ou d'entraînements, en
- paramétrant et projetant un programme de commande selon l'une des revendications 1 à 5,
- compilant le programme de commande décrypté et
- élaborant le programme de commande compilé par un microprocesseur.

7. Système de paramétrage de projection de programme de commande, comportant
- un premier système de développement (1) destiné à développer un code de programme de commande (5, 7) qui comporte une unité de cryptage (9) destinée à crypter le code de commande (5, 7),
- un dispositif de communication (2) destiné à transférer le code de programme de commande crypté (10, 16) du premier dispositif de développement (1) à un deuxième dispositif de développement (3), et
- le deuxième dispositif de développement (3) qui comporte un dispositif de décryptage (18) destiné à décrypter le code de programme de commande crypté (10, 16),
**caractérisé en ce que** seule une partie du programme de commande est cryptée et, dans le deuxième dispositif de développement (3), un deuxième éditeur (17) destiné à éditer le code de programme de commande (10,16) est commuté entre un pré-processeur (18) destiné à décrypter le code de programme de commande partiellement cryptée (10, 16) 5 et le dispositif de communication (2).

8. Système selon la revendication 7, dans lequel le premier dispositif de développement (1) comporte un dispositif d'exportation destiné à exporter le code de programme de commande crypté (10, 16) dans un format lisible par Standard-Internetclients, notamment XML ou HTML, et le deuxième dispositif de développement (3) comporte un dispositif d'importation destiné à importer les données dans le format lisible par Standard-Internetclients.

9. Système selon la revendication 7 ou 8, dans lequel le cryptage et le décryptage des données sont effectués avec des clés asymétriques (11, 12).

10. Système selon l'une des revendications 7 à 9, dans lequel, dans le premier dispositif de développement (1), un post-processeur (9) destiné à crypter le code de programme de commande (5, 7) est commuté entre un premier éditeur (8) destiné à éditer le code de programme de commande (5, 7) et le dispositif de communication (2).

11. Système selon l'une des revendications 7 à 10, dans lequel la tête du programme de commande reste non cryptée.

12. dispositif de mise en service des systèmes de commande et/ou des entraînements, comportant
- un système de paramétrage et de projection de programme de commande selon l'une des revendications 7 à 11, le deuxième dispositif de développement (3) comportant un compilateur (20) destiné à compiler le programme de commande décrypté (19) et commandant un microprocesseur destiné à élaborer le programme de commande compilé.
